# EUROPEAN PATENT SPECIFICATION

(11) **EP 2 605 634 B1**
(45) Date of publication and mention of the grant of the patent: **25.11.2015**
(21) Application number: 11733860.8
(22) Date of filing: 19.07.2011
(51) Int. Cl.: A01D 43/08

(54) **HARVESTER DISCHARGE SPOUT**
AUSLAUFROHR EINER ERNTEMASCHINE
BEC DE DÉCHARGE DE MOISSONNEUSE

(30) Priority: 20.08.2010 GB 201013942
(43) Date of publication of application: 26.06.2013
(73) Proprietor: AGCO International GmbH, 8212 Neuhausen am Rheinfall (CH)
(72) Inventor: FRIEL, Holger, CH-19288 Glaisin (DE); SCHLEGEL, Christoph, CH-18057 Rostock (DE)
(74) Representative: AGCO Intellectual Property Department
(86) International application number: PCT/EP2011/062331
(87) International publication number: WO 2012/022564

(56) References cited:
- EP-A1- 0 672 339
- EP-A1- 1 344 446
- DE-A1- 3 316 325

## Description

The invention relates to forage harvesters/or combine harvesters and in particular to control flap arrangements used at the end of discharge spouts of such machines to control the discharge of harvested crop into an accompanying trailer.

One known arrangement, described in DE 33 16 325 A1, provides a harvester discharge spout outlet control flap arrangement comprising a first support frame for attachment to an outer end of a harvester discharge spout for supporting first crop deflecting control flap means, a second support frame for supporting second crop deflecting control flap means, and actuating means for pivoting the second support frame relative to the first support frame to deflect crop discharge from the outer end of the discharge spout.

Such control flap arrangements are well known but suffer from problems due to replacement necessitated by wear caused by continual impact from the harvested crop.

Furthermore, the geometry of such control flap arrangements must be easily changeable to adapt the crop discharge flow path according the crop harvested. This also requires easy replacement.

It is therefore an object of the present invention to provide an improved control flap arrangement which addresses the above problem.

A harvester discharge spout outlet control flap arrangement according to the present invention is characterised in that the first and second crop deflecting control flap means are detachably supported by first and second support frames, respectively, and in that the second support frame is pivotally mounted on an outer end of the first support frame.

Preferably the actuator acts directly between the first and second support frames.

Such an arrangement enables the crop defecting control flap means carried by the first or second support frame to be easily replaced when worn or damaged by impact from the crop etc. by simply detaching the control flap means from the relevant support need to disconnect frame without the any other items. In addition a second crop deflecting control flap means of a shorter length can be easily replaced with a longer one to adjust the crop discharge flow path.

The first support frame may also be pivotally mounted on the outer end of the discharge spout and a linkage may connect the second support frame with the end of the discharge spout so that movement of the second support frame relative to the first support frame by the actuator also moves the first support frame relative to the outer end of the discharge spout.

A third support frame may also be pivotally mounted on the outer end of the second support frame for detachably supporting a third crop deflecting control flap means therefrom and a further linkage connects the third support frame with the first support frame so that movement of the second support frame relative to the first support frame by the actuator also moves the third support frame relative to the first support frame.

The actuator is preferably a hydraulic cylinder.

Also preferably a sensor is provided to give a signal indicative of the relative angle between he support frames or between one of the support frames and the outer end of the discharge spout to enable the operation of the actuator to be controlled to give a desired crop discharge flow path.

The present invention will now be described, by way of example only, with reference to the accompanying drawings in which:

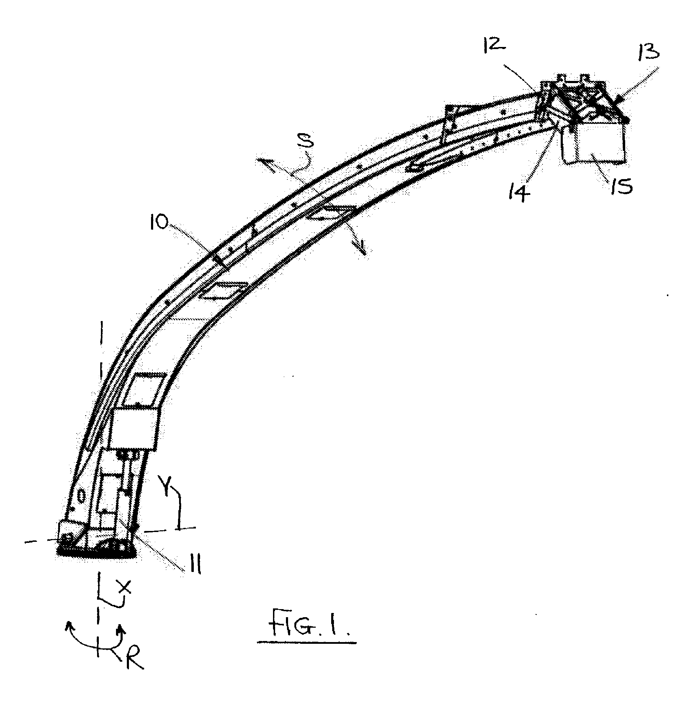

Figure 1 shows a discharge spout for a forage harvester provided with a spout outlet control flap arrangement in accordance with the present invention;
Figure 2 shows a perspective view of the spout outlet control flap arrangement fitted to the discharge spout of figure 1;
Figure 3 shows a side view of the spout outlet control flap arrangement of figure 2 in the straight configuration;
Figure 4 shows the control flap Arrangement of figure 2 in the fully angled position
Figure 5 shows an extended version of the control flap arrangement of figure 2 in the straight position,
Figure 6 shows the control flap arrangement of figure 5 in the fully angled position.

Referring to the drawings, a forage harvester discharge spout 10 is rotatable as indicated by the arrow R about a substantially vertical axis X by hydraulic motor (not shown).

The discharge spout 10 can also be raised and lowered as indicated by the arrow S by being pivoted by a hydraulic ram 11 about an axis Y which is as at right angles to axis X.

The outer end 12 of discharge spout 11 is provided with a control flap arrangement 13 which has a first control flap 14 and a second control flap 15 which can be pivoted relative to each other in order to change the flow path of the crop being discharged from the end of the spout 10.

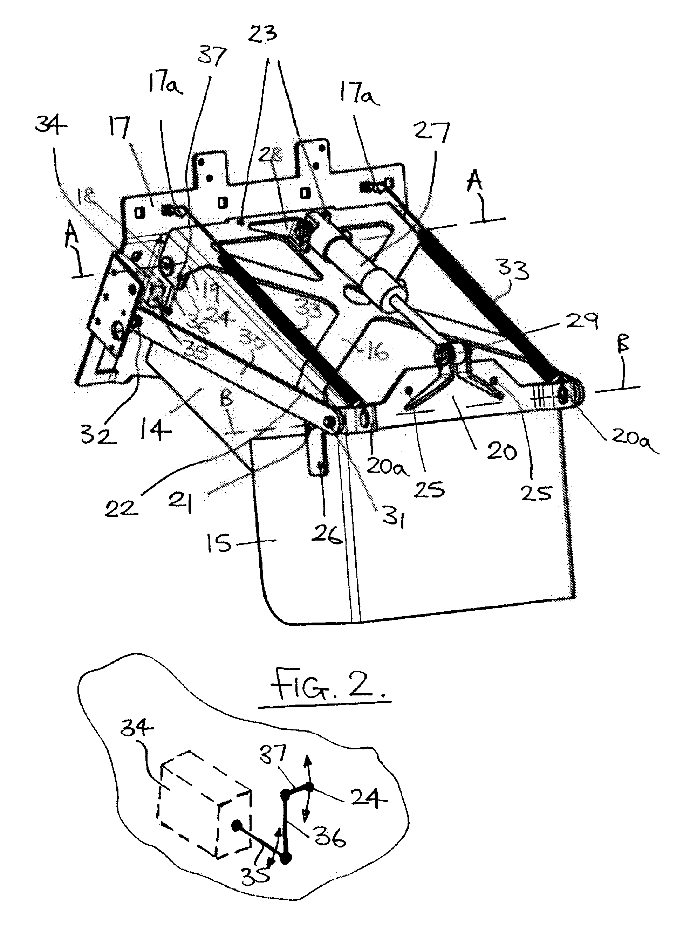

In accordance with the present invention, the first control flap 14 is supported on a first support frame 16 which is pivoted on a mounting member 17 which is bolted to the end of the discharge spout 10. The first support number 16 is free to pivot relative to the support member 17 about an axis A - A (see figure 2) via pins 18 which extend through downwardly extending ears 19 provided on the first support frame.

Mounted on the outer end of the first support frame 16 is a second support frame 20 which can pivot relative to the fist support frame 16 about an axis B - B via pins 21 which extend through a second pair of downwardly extending ears 22 on the first support frame 16.

First control flap 14 is detachably supported below first support framel6 using nuts and bolts or other detachable fasteners which extend through holes 23 and 24 provided in first frame 16.

Similarly, second control flap 15 is supported from second support frame 20 via detachable nuts and bolts or other fasteners extending through holes 25 and 26 provided on the second support frame.

A double acting hydraulic cylinder 27 extends between a support bracket 28 on first support frame 16 and a second support bracket 29 on second support frame 20. Second support frame 20 is also connected with mounting member 17 via links 30 which are pivotally connected at 31 and 32 with the second support frame 20 and the mounting member 17.

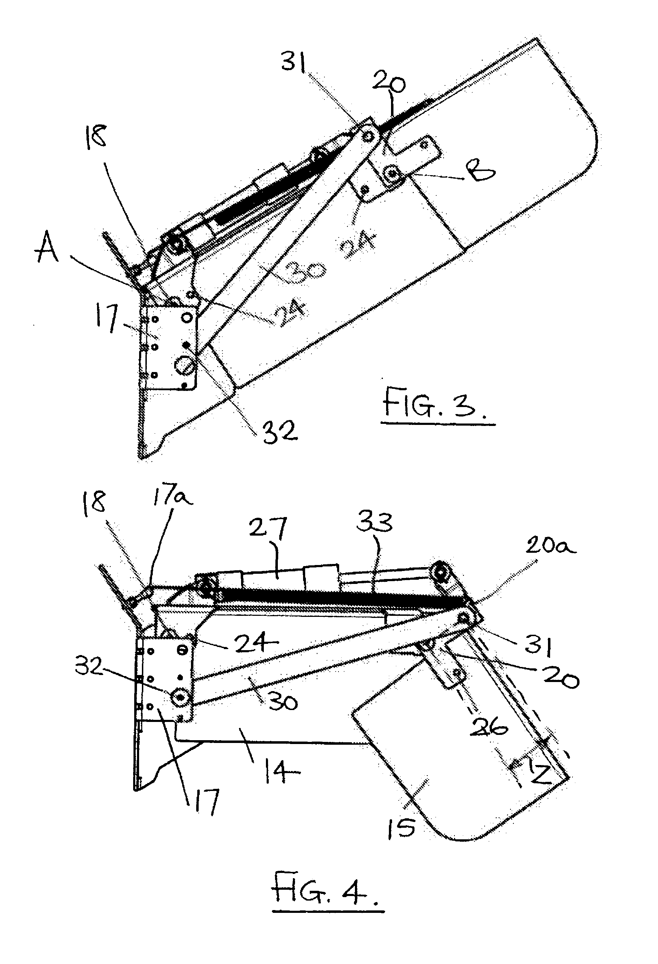

As best seen from figure 4, there is a lever arm Z between the pivot axis B-B and the pivotal connection 31 of link 30 with the second support frame 20. This lever arm ensures that, when the actuator 27 is operated to pivot the second support frame 20 and the second control flap 15 relative to the first support frame 16 and the fist control flap 14, the first support member 16 and associated control flap 14 are also caused to pivot about axis A - A.

Figure 3 shows the position adopted by the support frames 16 and 20 and their associated control flaps 14 and 15 when the cylinder 27 is in its fully retracted position. As can be seen this gives a substantially straight configuration of the two control flaps 14 and 15 relative to each other.

Figure 4 shows the configuration of the control flaps 14 and 15 when the ram 27 is in its fully extended position. This shows the two control flaps in their most relatively pivoted position in which the crop exiting from the spout 10 will be most deflected.

Tension springs 33 are arranged to act between brackets 20a on second support frame 20 and eyes 17a on support member 17. These tension springs take up all the slackness in the pivots and linkage connections and thus reduce vibration and associated noise etc.

As has been indicated earlier, the control flaps 14 and 15 are subject to a high rate of wear due to the impacts of the crop being discharged from spout 10. These flaps thus require relatively frequent replacements and, because the flaps are easily detachable from the associated support frames 16 and 20, these flaps can be easily replaced without the need to disconnect any of the other components of the control flap arrangement.

In addition the control flap 15 can be easily substituted by a control flap which is longer or shorter (in direction of crop flow) to adjust the crop discharge flow path.

The control flap arrangement may be provided with a sensor 34 (see Figure 2) which, for example, has an input arm 35 connected by a link 36 with a pivot pin 37 mounted one of the holes 24 in one of the downwardly projecting ears 19. This sensor 34 provides an indication of the pivot angle of the first support frame 16 (and hence the first control flap 14) relative to the mounting member 17. This pivot angle is also indicative of the pivoting of control flap 15 relative to control flap 14 due to the presence of the control links 30.

The signal from sensor 34 can therefore be used as an input into a control system for adjusting the relative angle of control flaps 14 and 15 and thus the discharge path of the crop being discharged from the spout 10.

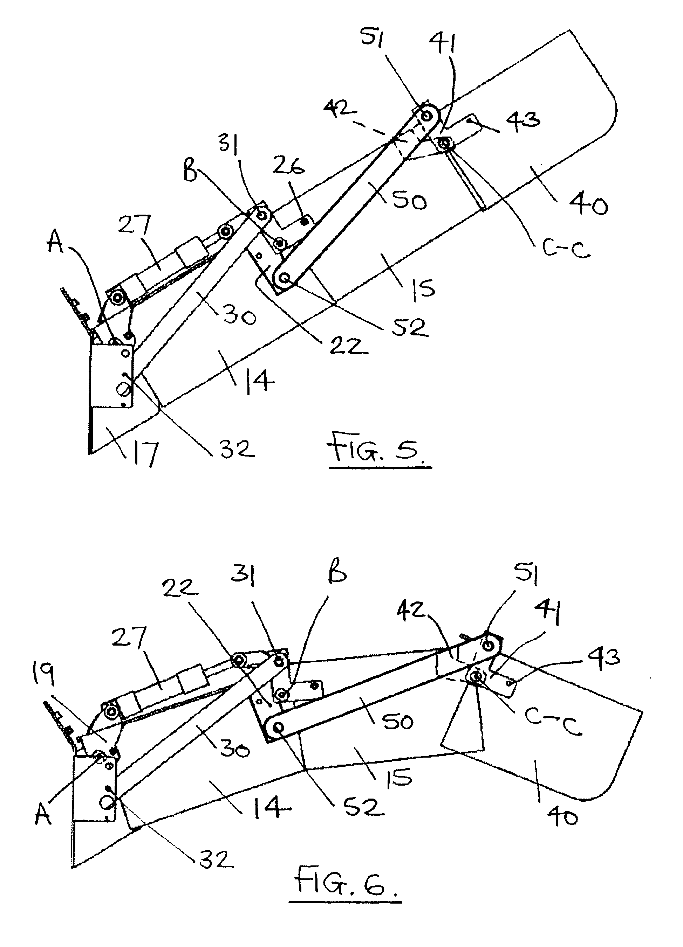

Figures 5 and 6 show and extended form of the control flap arrangement shown in figures 2 to 4 in which a third control flap 40 is mounted on a third support frame 41 which is pivotally mounted on a support structure 42 secured to the outer end of the second control flap 15 for pivoting about an axis C - C relative to the second control flap. The third support frame 41 is also connected by a link 50 and pins 51 to the third support frame 41 and by pins 52 to extended downwardly projecting ears 22 provided on the first support frame 16. Flap 40 is again secured to frame 41 by nuts and bolts or other fasteners extending through holes 43 and other holes (not visible in Figures 5 and 6) in the top of frame 41.

Thus in this extended arrangement, when the cylinder 27 is in its fully retracted position all three control flaps 14, 15 and 40 assume the straight configuration shown in figure 5 and when the cylinder 27 is extended the control flaps assume a progressively more curved relative configuration, as shown in figure 6.

Again all three control flaps 14, 15 and 40 can be easily changed when necessary and the angular configuration of all three control flaps is controlled by the single cylinder 27.

Present invention thus provides is simple but effective control arrangement for the control flaps of a forage harvester discharge spout.

As will be appreciated, the invention is also applicable to the discharge spouts of other harvesters such as combine harvesters used to harvest grain or similar crops.

## Claims

1. A harvester discharge spout outlet control flap arrangement comprising a first support frame (16) for attachment to an outer end of a harvester discharge spout (10) for supporting first crop deflecting control flap means (14), a second support frame (20) for supporting second crop deflecting control flap means (15), and actuating means (27) for pivoting the second support frame (20) relative to the first support frame (16) to deflect crop discharge from the outer end of the discharge spout, **characterised in that** the first (14) and second (15) crop deflecting control flap means are detachably supported by first (16) and second (20) support frames, respectively, and **in that** the second support frame (20) is pivotally mounted on an outer end of the first support frame (16).

2. A control flap arrangement according to claim 1 in which the actuator (27) acts directly between the first (16) and second (20) support frames.

3. A control flap arrangement according to claim 1 or 2 in which the first support frame (16) is pivotally mounted on the outer end of the discharge spout (10) and a linkage (30) connects the second support frame (20) with the end of the discharge spout (10) so that movement of the second support frame (20) relative to the first support frame (16) by the actuator (27) also moves the first support frame (16) relative to the outer end of the discharge spout (10).

4. A control flap arrangement according to claim 3 in which a third support frame (41) is pivotally mounted on the outer end of the second support frame (20) for detachably supporting a third crop deflecting control flap means (40) therefrom and a further linkage (50) connects the third support frame (41) with the first support frame (16) so that movement of the second support frame (20) relative to the first support frame (16) by the actuator (27) also moves the third support frame (41) relative to the first support frame (16).

5. A control flap arrangement according to any one of claims 1 to 4 in which the actuator (27) is a hydraulic cylinder.

6. A control flap arrangement according to any one of claims 1 to 5 in which a sensor (34) is provided to give a signal indicative of the relative angle between the support frames (16, 20) or between one of the support frames and the outer end of the discharge spout (10) to enable the operation of the actuator (27) to be controlled to give a desired crop discharge flow path.

## Patentansprüche

1. Steuerklappenanordnung für den Auslass einer Abgabemündung einer Erntemaschine mit einem ersten Tragrahmen (16) für eine Befestigung an einem äußeren Ende der Abgabemündung (10) der Erntemaschine zum Abstützen eines ersten Steuerklappenorgans (14) zum Ablenken von Erntegut, einem zweiten Tragrahmen (20) zur Abstützung eines zweiten Steuerklappenorgans (15) zum Ablenken von Erntegut und mindestens einem Betätigungsmittel (27) zum Verschwenken des zweiten Tragrahmens (20) relativ zu dem ersten Tragrahmen (16) zum Ablenken der Abgabe von Erntegut von dem äußeren Ende der Abgabemündung, **dadurch gekennzeichnet, dass** das erste und zweite Steuerklappenorgan (14, 15) zum Ablenken von Erntegut jeweils lösbar von dem ersten und zweiten Tragrahmen (16, 20) abgestützt werden und dass der zweite Tragrahmen (20) verschwenkbar an einem äußeren Ende des ersten Tragrahmens (16) montiert ist.

2. Steuerklappenanordnung nach Anspruch 1, wobei der Aktuator (27) direkt zwischen dem ersten und zweiten Tragrahmen (16, 20) wirkt.

3. Steuerklappenanordnung nach Anspruch 1 oder 2, wobei der erste Tragrahmen (16) schwenkbar an dem äußeren Ende der Abgabemündung (10) montiert ist und ein Verbindungselement (30) den zweiten Tragrahmen (20) mit dem Ende der Abgabemündung (10) verbindet, so dass eine Bewegung des zweiten Tragrahmens (20) relativ zu dem ersten Tragrahmen (16) durch den Aktuator (27) auch den ersten Tragrahmen (16) relativ zu dem äußeren Ende der Abgabemündung (10) bewegt.

4. Steuerklappenanordnung nach Anspruch 3, wobei ein dritter Tragrahmen (41) schwenkbar an dem äußeren Ende des zweiten Tragrahmens (20) montiert ist zur lösbaren Abstützung eines dritten Steuerklappenorgans (40) zum Ablenken von Erntegut und wobei ein weiteres Verbindungselement (50) den dritten Tragrahmen (41) mit dem ersten Tragrahmen (16) verbindet, so dass eine Bewegung des zweiten Tragrahmens (20) relativ zu dem ersten Tragrahmen (16) durch den Aktuator (27) auch den dritten Tragrahmen (41) relativ zu dem ersten Tragrahmen (16) bewegt.

5. Steuerklappenanordnung nach einem der Ansprüche 1 bis 4, wobei der Aktuator (27) ein hydraulischer Zylinder ist.

6. Steuerklappenanordnung nach einem der Ansprüche 1 bis 5, wobei ein Sensor (34) vorhanden ist zur Abgabe eines Signals, welches den relativen Winkel zwischen den Tragrahmen (16, 20) oder zwischen einem der Tragrahmen und dem äußeren Ende der Abgabemündung (10) indiziert zur Ermöglichung eines gesteuerten oder geregelten Betriebs des Aktuators (27) zur Bereitstellung eines gewünschten Fluss-Pfades für die Abgabe von Erntegut.

## Revendications

1. Agencement de volet de commande de sortie de bec de déchargement de moissonneuse comprenant un premier cadre de support (16) destiné à être fixé sur une extrémité externe d'un bec de déchargement de moissonneuse (10) afin de supporter un premier moyen formant volet de commande de déviation de récolte (14), un deuxième cadre de support (20) destiné à supporter un deuxième moyen formant volet de commande de déviation de récolte (15), et des moyens d'activation (27) destinés à faire pivoter le deuxième cadre de support (20) par rapport au premier cadre de support (16) afin de dévier le déchargement de récolte à partir de l'extrémité externe du bec de déchargement, **caractérisé en ce que** les premier (14) et deuxième (15) moyens formant volet de commande de déviation de récolte sont supportés de manière amovible respectivement par les premier (16) et deuxième (20) cadres de support, et **en ce que** le deuxième cadre de support (20) est monté de manière à pouvoir pivoter sur une extrémité externe du premier cadre de support (16).

2. Agencement de volet de commande selon la revendication 1, dans lequel l'actionneur (27) agit directement entre les premier (16) et deuxième (20) cadres de support.

3. Agencement de volet de commande selon la revendication 1 ou 2, dans lequel le premier cadre de support (16) est monté de manière à pouvoir pivoter sur l'extrémité externe du bec de déchargement (10) et une biellette (30) relie le deuxième cadre de support (20) à l'extrémité du bec de déchargement (10) de telle sorte que le déplacement du deuxième cadre de support (20) par rapport au premier cadre de support (16) par l'actionneur (27) déplace aussi le premier cadre de support (16) par rapport à l'extrémité externe du bec de déchargement (10).

4. Agencement de volet de commande selon la revendication 3, dans lequel un troisième cadre de support (41) est monté de manière à pouvoir pivoter sur l'extrémité externe du deuxième cadre de support (20) afin de supporter de manière amovible un troisième moyen formant volet de commande de déviation de récolte (40) à partir de ce dernier et une autre biellette (50) relie le troisième cadre de support (41) au premier cadre de support (16) de telle sorte que le mouvement du deuxième cadre de support (20) par rapport au premier cadre de support (16) par l'actionneur (27) déplace aussi le troisième cadre de support (41) par rapport au premier cadre de support (18).

5. Agencement de volet de commande selon l'une quelconque des revendications 1 à 4, dans lequel l'actionneur (27) est un vérin hydraulique.

6. Agencement de volet de commande selon l'une quelconque des revendications 1 à 5, dans lequel un capteur (34) est agencé afin de produire un signal indicatif de l'angle relatif entre les cadres de support (18, 20) ou entre l'un des cadres de support et l'extrémité externe du bec de déchargement (10) afin de permettre la commande du fonctionnement de l'actionneur (27) de manière à obtenir un trajet de passage de déchargement de récolte désiré.
